# EUROPÄISCHE PATENTSCHRIFT

(11) **EP 3 106 033 B1**
(45) Veröffentlichungstag und Bekanntmachung des Hinweises auf die Patenterteilung: **26.04.2017**
(21) Anmeldenummer: 15172382.2
(22) Anmeldetag: 16.06.2015
(51) Int. Cl.: A01N 55/10, A01N 47/36, A01N 25/30, A01P 13/00, A01N 25/10

(54) **BIOLOGISCH ABBAUBARES SUPERSPREITENDES ORGANOMODIFIZIERTES TRISILOXAN**
BIODEGRADABLE SUPER DISPERSING ORGANOMODIFIED TRISILOXANE
TRISILOXANE ORGANOMODIFIÉ BODÉGRADABLE À EFFET SUPER ÉTALANT

(43) Veröffentlichungstag der Anmeldung: 21.12.2016
(73) Patentinhaber: Evonik Degussa GmbH, 45128 Essen (DE)
(72) Erfinder: HÄNSEL, Rene, 46282 Dorsten (DE); SIEVERDING, Ewald, Dr., 55578 St. Johann (DE); FERENZ, Michael, Dr., 45147 Essen (DE); WINDBIEL, Gerd, 45289 Essen (DE); JACOBI, Andrea, Hella, Dr., 45307 Essen (DE)

(56) Entgegenhaltungen:
- EP-A1- 1 314 356
- WO-A1-94/22311

## Beschreibung

Polyether modifizierte Siloxane, die sowohl superspreitend als auch leicht biologisch abbaubar sind.

### Beschreibung der Erfindung:

Im Pflanzenschutz, bei Schädlingsbekämpfungsmitteln und auch im industriellen non-crop Bereich werden oft zur Verbesserung der biologischen Wirksamkeit solcher Pestizide bzw. Pestizidmischungen sogenannte Adjuvantien (oder Adjuvants) oder auch Hilfsmittel bzw. Zusatzstoffe eingesetzt. Die Wirksamkeit wird häufig auch als Effektivität bezeichnet. Das Pesticides Safety Directorate (PSD, der ausführende Bereich der Health and Safety Executive (HSE), einer nicht-staatlichen, öffentlichen Vereinigung in Großbritannien) definiert ein Adjuvant als eine Substanz, die neben Wasser, nicht selbst als Pestizid wirksam ist, aber die Effektivität eines Pestizides erhöht. (http://www.pesticides.gov.uk/guidance/industries/pesticides/topics/pesticideapprovals/legislation/adjuvants-an-introduction). Diese werden entweder der wässrigen Spritzbrühe kurz vor dem Ausbringen und Aufsprühen zugesetzt (als Tankmischungsadditiv) oder direkt in Pflanzenschutzmittelformulierungen eingebaut. Bei der Verwendung des Wortes Adjuvant werden oft in Patenten oder der Literatur als Synonym die Begriffe Tensid oder Netzmittel verwendet, die jedoch viel zu weitreichend sind und eher als Oberbegriff gedeutet werden können. Aufgrund der hier avisierten Verwendung wird auf den Begriff Adjuvant zurückgegriffen.

In der Praxis gibt es zahlreiche Pflanzenschutzwirkstoffe, die nur mit Hilfe von Adjuvants eine akzeptable Effektivität, also eine praxisrelevante Wirkung erreichen. Die Adjuvantien helfen hier die Schwächen des Wirkstoffes auszugleichen, wie zum Beispiel die UV-Empfindlichkeit von Avermectinen (werden durch ultraviolette Strahlung zerstört) oder die Wasserinstabilität von Sulfonylharnstoffen. Neuere Wirkstoffe sind in der Regel nicht wasserlöslich und, um sich daher effektiv auf einem target = Zielorganismus = Pflanzen verbreiten zu können, sind Adjuvantien für die wässrige Sprühbrühe unerlässlich, um auf dem Wege der physikalischen Beeinflussung der wässrigen Lösungen die schlechte Benetzung von Oberflächen auszugleichen. Zudem helfen Adjuvantien technische Anwendungsprobleme, wie geringe Wasseraufwandmengen, unterschiedliche Wasserqualitäten und den Trend erhöhter Auftragsgeschwindigkeiten, zu überwinden. Die Erhöhung der Pestizidwirksamkeit sowie der Ausgleich von Schwächen der Pflanzenschutzmittel durch Adjuvantien, werden allgemein als Effektivitätssteigerung oder Wirkungsverstärkung der Pflanzenschutzmittelanwendung bezeichnet.

Zur Anwendung kommen im Pflanzenschutz, bei der Schädlingsbekämpfung und im industriellen Bereich chemische oder biologische Pflanzenschutzmittel (im Folgenden auch Pestizide genannt) oder Pestizidgemische. Dieses können sein, zum Beispiel Herbizide, Fungizide, Insektizide, Wachstumsregulatoren, Molluskizide, Bakterizide, Viridizide, Mikronährstoffe sowie biologische Pflanzenschutzmittel auf Basis von Naturstoffen oder lebenden oder ver- bzw. bearbeiteten Mikroorganismen. Pestizide Wirkstoffe sind im Zusammenhang mit Ihren Einsatzgebieten z.B. im 'The Pesticide Manual', 14th edition, 2006, The British Crop Protection Council, aufgelistet; biologische Wirkstoffe sind z.B. im 'The Manual of Biocontrol Agents', 2001, The British Crop Protection Council angegeben. Pestizid wird im Weiteren immer als Sammelbegriff verwendet.

Um das landwirtschaftliche Potential und die Wirkungen von Substanzen beurteilen zu können, müssen neben Labor- und Gewächshausuntersuchungen realistische Anwendungen in der Landwirtschaft am Beispiel von Feldversuchen durchgeführt werden.

In Praxis werden solche Pflanzenschutzmittel oft einem Tank mit Wasser als Inhalt zugegeben und unter gelindem Rühren in der sogenannten Spritzbrühe verteilt, um die konzentrierte Formulierung des Wirkstoffes vor dem Aussprühen zu verdünnen und den Pflanzen verträglich zu machen. Adjuvantien werden hierbei entweder vor dem Tankmixvorgang in die Pflanzenschutzformulierung mit einformuliert oder als separate Tankmischungsadditive der Spitzbrühe beigemengt.

Als Adjuvantien werden häufig synthetische Tenside wie z.B. ethoxylierte Alkohole oder Alkylpolyglykoside eingesetzt. Die Verwendung von wasserlöslichen, hydrophilen Polyglycerinestern als Adjuvantien in Pflanzenschutzformulierungen ist ebenfalls bekannt (WO 2002/034051, US 2006/0264330A1). In der Regel ist diesen Adjuvantien ist gemein, dass es sich um wasserlösliche hydrophile Substanzen handelt. Darüber hinaus werden häufig alkoxylierte Trisiloxantenside als Adjuvantien eingesetzt, die die statische Oberflächenspannung von Spritzbrühen oder Wasser signifikant stärker erniedrigen, als in der Vergangenheit verwendete organische Tenside wie zum Beispiel Nonylphenolethoxylate. Trisiloxantenside haben die allgemeine Struktur Me3SiO-SiMeR-OSiMe3, wobei der Rest R ein Polyetherradikal darstellt. Die Verwendung von superspreitenden Trisiloxantensiden, wie z.B. dem BREAK-THRU® S-240, Evonik Industries AG, in Kombination mit einem Pestizid führt zu einer Verbesserung der Pestizidaufnahme durch die Pflanze und allgemein zu einer Steigerung von dessen Wirksamkeit oder dessen Effektivität. In US 6,734,141 wird beschrieben, dass für diese Effektivitätssteigerung speziell eine geringe Oberflächenspannung und nicht unbedingt die Spreitung verantwortlich ist. Unter dem Begriff Oberflächenspannung wird im Stand der Technik die statische Oberflächenspannung verstanden. Beispielsweise bei Trisiloxanen liegt die statische Oberflächenspannung bei ca. 20 bis 25 mN/m.

In WO1994022311 werden superspreitende Zusammensetzungen offenbart, die Polyether modifizierte Trisiloxane enthalten, welche zwei Gruppen von Polyethern aufweisen können, zum einen Polyether, die ausschließlich Oxyethylengruppen aufweisen, zum anderen Polyether, die neben Oxyethylengruppen auch Oxypropylengruppen aufweisen können. Experimentelle Daten werden für modifizierte Trisiloxane offenbart, deren Polyetherrest ausschließlich Oxyethylengruppen enthält. Diese sind z.B. als SILWET L-77 bekannt.

Nachteil des Standes der Technik ist, dass keines der superspreitenden Trisiloxane biologisch abbaubar ist. Insbesondere aus Umweltschutzgründen, wird immer mehr Wert auf umweltfreundliche Produkte gelegt, um insbesondere die Akzeptanz der Bevölkerung gegenüber chemischen Produkten in der Landwirtschaft zu erhalten.

Unter "superspreitend" wird im Umfang der vorliegenden Erfindung verstanden, dass eine 0,1 Gew.-prozentige Lösung in Wasser nach Untersuchung in Anlehnung an ASTM E2044 - 99 (2012) einen Spreitungsdurchmesser von mindestens 35 mm aufweist. Bevorzugt spreitet ein Tropfen einer 0,1 Gew.-prozentige Lösung in Wasser mit einem Volumen von 50 µl auf einer Polypropylenfolie zu einer Fläche von mindestens 10 cm². Bevorzugt wird die Spreitung bei 25 °C untersucht, bevorzugt wird die Spreitung bei einer relativen Luftfeuchtigkeit von 60 % und einen Druck von 1013 mbar bestimmt.

Unter "leicht biologisch abbaubar" wird im Umfang der vorliegenden Erfindung die Abbaubarkeit nach OECD Methode 301 F CD verstanden, bevorzugt wie in den Beispielen beschrieben.

Aufgabe der vorliegenden Erfindung war es zumindest ein Nachteil des Standes der Technik überwunden wird.

Überraschenderweise wurde gefunden, dass Zusammensetzungen enthaltend Polyether modifizierte Siloxane wie in den Ansprüchen beschrieben sowohl superspreitend als auch leicht biologisch abbaubar sind.

Gegenstand der vorliegenden Erfindung sind Zusammensetzungen enthaltend Polyether modifizierte Siloxane gemäß Formel (I)

MₐD_{b}D'_{c} Formel (I)

Mit M = R¹₃SiO_{1/2}, D = R¹₂SiO_{2/2}, D' = R¹R²SiO_{2/2},
wobei
- a: gleich 2
- b: zwischen 0 und 0,1, bevorzugt 0
- c: zwischen 1,0 und 1,15,
bevorzugt zwischen 1,0 und 1,10, insbesondere bevorzugt zwischen 1,00 und 1,05

R¹ unabhängig voneinander Kohlenwasserstoff mit 1 bis 8 Kohlenstoffatomen, bevorzugt Methyl-, Ethyl-, Propyl-, oder Phenyl-Reste, insbesondere bevorzugt Methyl-Reste
R² unabhängig voneinander ein Polyether-Rest der Formel (II)

   -R³O[CH₂CH₂O]ₘ[CH₂CH(CH₃)O]ₙ R⁵ Formel (II)

   wobei
   m = 3,4 bis 11,0, bevorzugt 3,6 bis 9,9, mehr bevorzugt 4,5 bis 8,5,
   n = 2,5 bis 8,0 bevorzugt 2,7 bis 7,5, mehr bevorzugt 3,0 bis 6,0, jedoch mit den Maßgaben, dass gilt:
   m/n = 1,9 bis 2,8
   R³ unabhängig voneinander divalente Kohlenwasserstoffreste mit 2 bis 8 Kohlenstoffatomen, bevorzugt Ethylen-, Propylen- 1-Methylpropylen-, 1,1-Dimethylpropylen-Rest, insbesondere bevorzugt -CH₂CH₂CH₂-,
   R⁵ Wasserstoff,
wobei die Polyether modifizierten Siloxane gemäß Formel (I) eine biologische Abbaubarkeit von größer 60%, weiter mehr bevorzugt von größer oder gleich 63% und insbesondere bevorzugt von größer oder gleich 65% aufweisen, wobei der Maximalwert 100% beträgt,
wobei die Molmasse des Polyetherrestes M(PE) größer als 520 g/mol und kleiner als 660 g/mol ist.

Bevorzugt besitzt der Polyetherrest berechnet ohne R³O und berechnet ohne R⁵ eine Molmasse M (PE) berechnet sich nach 44 g/mol *m + 58 g/mol* n, wobei sich die Indices m und n auf Formel (II) beziehen.

Die bevorzugten Werte für M (PE) sind: Untere Grenzen M (PE) größer als 520 g/mol, bevorzugt größer als 530 g/mol, mehr bevorzugt größer als 535 g/mol; obere Grenze M (PE) kleiner als 660 g/mol, bevorzugt kleiner als 630 g/mol mehr bevorzugt kleiner als 600 g/mol.

Bevorzugt ist der Wert für M (PE) größer als 520 g/mol und kleiner als 660 g/mol, insbesondere größer als 535 g/mol und kleiner als 600 g/mol.

Bevorzugt ist die Summe m + n größer 9 bis zu 19, mehr bevorzugt größer 9,5 bis zu 15 und insbesondere bevorzugt größer 10 bis zu 12.

Mehr bevorzugt ist R⁵ gleich Wasserstoff und der der Wert für M (PE) größer als 520 g/mol und kleiner als 660 g/mol, insbesondere bevorzugt ist R₅ gleich Wasserstoff und der Wert für M (PE) größer als 535 g/mol und kleiner als 600 g/mol.

Besonders bevorzugt weisen die erfindungsgemäßen Zusammensetzungen die Polyether modifizierten Siloxane der Formel (I) mit einem Index c zwischen 1 und 1,05 auf, wobei die Indices des Polyetherestes nach Formel (II) sind m von 3,4 bis 11,0 und n von 2,5 bis 8,0.

Besonders bevorzugt weisen die erfindungsgemäßen Zusammensetzungen die Polyether modifizierten Siloxane der Formel (I) mit einem Index c zwischen 1 und 1,05 auf, wobei das Verhältnis m/n ist 0,8 bis 2,8, insbesondere 1,9 bis 2,8.

Insbesondere bevorzugt weisen die erfindungsgemäßen Zusammensetzungen die Polyether modifizierten Siloxane der Formel (I) mit einem Index c zwischen 1 und 1,05 auf, wobei die Molmasse des Polyetherrestes M(PE) ist größer als 520 g/mol und kleiner als 660 g/mol.

Insbesondere bevorzugt weisen die erfindungsgemäßen Zusammensetzungen die Polyether modifizierten Siloxane der Formel (I) mit einem Index c zwischen 1 und 1,05 auf, wobei der Rest R⁵ ist gleich Wasserstoff ist.

Insbesondere bevorzugt weisen die erfindungsgemäßen Zusammensetzungen die Polyether modifizierten Siloxane der Formel (I) mit einem Index c zwischen 1 und 1,05 auf, wobei die Molmasse des Polyetherrestes M(PE) ist größer als 520 g/mol und kleiner als 660 g/mol und der Rest R⁵ ist gleich Wasserstoff.

Bevorzugt weisen die erfindungsgemäßen Zusammensetzungen keine weiteren Polyether modifizierten Siloxane außer denen nach Formel (I) auf.

Ein Vorteil der erfindungsgemäßen Zusammensetzungen ist, dass sie in Wasser superspreitende Eigenschaften im oben definierten Sinne aufweisen. Dazu wird die Fläche eines Tropfens auf einer Polypropylenfolie wie in den Beispielen näher beschrieben bestimmt.

Bevorzugt weisen die erfindungsgemäßen Zusammensetzungen als 0,1 Gew.-prozentige Lösung in Wasser eine Spreitfläche von 10 bis 60 cm², bevorzugt von 15 bis 50 cm² und mehr bevorzugt von 20 bis 40 cm² auf. Mehr bevorzugt weisen die erfindungsgemäßen Zusammensetzungen die vorgenannten Spreitungen bei einer Temperatur von 25°C auf.

Polyether modifizierte Siloxane nach Formel (I) bei denen Index c mindestens 1,2 ist sind gemäß US 6,734,141 als nichtspreitende Verbindungen bekannt und sind von der vorliegenden Erfindung ausgeschlossen.

Bevorzugt weisen die erfindungsgemäßen Zusammensetzungen die Polyether modifizierten Siloxane der Formel (I) auf, wobei der Index d ist 1,0 bis 1,05 und eine 0,1 Gew.-prozentige Lösung dieser Siloxane in Wasser weist eine Spreitfläche von 15 bis 60 cm² auf.

Besonders bevorzugt weisen die erfindungsgemäßen Zusammensetzungen die Polyether modifizierten Siloxane der Formel (I) mit einem Index c zwischen 1 und 1,05 auf, wobei das Verhältnis m/n 0,8 bis 2,8 ist und eine 0,1 Gew.-prozentige Lösung dieser Siloxane in Wasser weist eine Spreitfläche von 15 bis 60 cm² auf.

Ein weiterer Vorteil der erfindungsgemäßen Zusammensetzungen ist ihre biologische Abbaubarkeit.

Die biologische Abbaubarkeit wird vorzugsweise bestimmt nach der OECD 301 F Methode bestimmt. Mehr bevorzugt wird die biologische Abbaubarkeit nach OECD 301 F nach 28 d bei 22°C bestimmt. Insbesondere bevorzugt wird die biologische Abbaubarkeit wie in den Beispielen beschrieben bestimmt.

Bevorzugt weisen die Polyether modifizierten Siloxane gemäß Formel (I) der erfindungsgemäßen Zusammensetzungen eine biologische Abbaubarkeit von größer 60%, weiter mehr bevorzugt von größer oder gleich 63% und insbesondere bevorzugt von größer oder gleich 65% auf, wobei der Maximalwert 100% beträgt.

Bevorzugt weisen die erfindungsgemäßen Zusammensetzungen die Polyether modifizierten Siloxane der Formel (I) auf, wobei der Index d 1,0 bis 1,05 ist und eine biologische Abbaubarkeit dieser Siloxane ist größer als 60%.

Besonders bevorzugt weisen die erfindungsgemäßen Zusammensetzungen die Polyether modifizierten Siloxane der Formel (I) eine biologische Abbaubarkeit von größer als 60% auf, weiterhin ist der Index c zwischen 1 und 1,05, wobei die Molmasse des Polyetherrestes M(PE) größer ist als 520 g/mol und kleiner als 660 g/mol und der Rest R⁵ ist gleich Wasserstoff.

Besonders bevorzugt weisen die erfindungsgemäßen Zusammensetzungen die Polyether modifizierten Siloxane der Formel (I) eine biologische Abbaubarkeit von größer als 60% auf, weiterhin ist der Index c zwischen 1 und 1,05, wobei die Molmasse des Polyetherrestes M(PE) größer als 520 g/mol und kleiner als 660 g/mol ist, der Rest R⁵ gleich Wasserstoff ist und eine 0,1 Gew.-prozentige Lösung dieser Siloxane in Wasser eine Spreitfläche von 15 bis 60 cm² aufweist.

Die erfindungsgemäßen Zusammensetzungen können nach den Methoden des Standes der Technik hergestellt werden, bevorzugt jedoch nach dem erfindungsgemäßen Verfahren.

Ein weiterer Gegenstand der vorliegenden Erfindung ist ein Verfahren zur Herstellung der erfindungsgemäßen Zusammensetzungen, in dem in einem ersten Schritt ein H-Siloxan der Formel (V)

MₐD_{b}D'_{d} (V)

Mit M = R¹₃SiO_{1/2}; D = R¹₂SiO_{2/2}, D' = R¹R²SiO_{2/2}, wobei
- a: gleich 2,
- b: zwischen 0 und 0,1,
- d: zwischen 1,16 und 3

R¹ unabhängig voneinander Kohlenwasserstoff mit 1 bis 8 Kohlenstoffatomen, bevorzugt Methyl-, Ethyl-, Propyl-, oder Phenyl-Reste, insbesondere bevorzugt Methyl-Reste
R² Wasserstoff
   gereinigt wird und in einem zweiten Schritt im Sinne einer Hydrosilylierung mit einem terminal ungesättigten Polyether der Formel (VI)

   R⁴O[CH₂CH₂O]ₘ[CH₂CH(CH₃)O]ₙR⁵ (VI)

   wobei die Indices m und n sowie deren Verhältnis zueinander und R⁵ wie für Formel (II) definiert sind.
   R⁴ unabhängig voneinander einwertiger terminal ungesättigter Kohlenwasserstoff mit 2 bis 8 Kohlenstoffatomen, bevorzugt CH₂=CH₂-, CH₂=CHCH₂-, CH₂=CHCH(CH₃)-, CH₂=CHC(CH₃)₂-, insbesondere bevorzugt CH₂=CHCH₂-, unterzogen wird.

Bevorzugt wird das H-Siloxan gemäß Formel (V) im ersten Schritt des erfindungsgemäßen Verfahrens gereinigt, indem das H-Siloxan einem geeigneten thermischen Trennverfahren unterzogen wird. Thermische Trennverfahren sind unter diesem Begriff dem Fachmann bekannt und umfassen alle Verfahren, die auf der Einstellung eines thermodynamischen Phasengleichgewichtes beruhen. Bevorzugt thermische Trennverfahren sind ausgewählt aus der Liste enthaltend Destillation, Rektifikation, Adsorption, Kristallisation, Extraktion, Absorption, Trocknung und Ausfrieren, besonders bevorzugt sind Methoden der Destillation und Rektifikation. Besonders bevorzugt sind Destillation und Rektifikation bei Normaldruck.

Insbesondere bevorzugt ist die Destillation und Rektifikation bei Normaldruck für die Verbindungen der Formel (V) mit R² gleich Wasserstoff und den Indices a und b gleich null und d gleich 1,16 bis 1,22 bei einer Kopftemperatur von 142°C unter Normaldruck zur Aufreinigung des Produktes.

Bevorzugt kommen im erfindungsgemäßen Verfahren keine H-Siloxane der Formel (V) zur Anwendung, die einem anderen als einem thermischen Trennverfahren unterzogen wurden.

Der Index d der Verbindungen der Formel (V) kann nach den Methoden des Standes der Technik bestimmt werden, bevorzugt mit Hilfe der 1H-NMR-Spektroskopie, mehr bevorzugt nach der Methode wie in den Beispielen beschrieben.

Die Hydrosilylierungsreaktion des erfindungsgemäßen Verfahrens wird bevorzugt mit Hilfe der dem Fachmann geläufigen Katalysatoren der Platingruppe katalysiert, mehr bevorzugt mit Hilfe von Karstedtkatalysatoren.

Die Hydrosilylierungsreaktion des erfindungsgemäßen Verfahrens wird in Bezug auf den Wasserstoffgehalt des H-Siloxans der Formel (V) bevorzugt zu einem vollständigen Umsatz gebracht. Unter vollständigem Umsatz wird im Rahmen der vorliegenden Erfindung verstanden, dass der Umsatz an SiH-Funktionen > 99 % beträgt. Der Nachweis erfolgt in dem Fachmann geläufiger Art, bevorzugt gasvolumetrisch nach alkalischer Zersetzung. Dabei kann zum Beispiel eine Probe des Reaktionsgemisches mit einer butanolischen Natriumbutanolat-Lösung (w (Natriumbutanolat) = 5 %) umgesetzt werden und anhand der Menge des entstehenden Wasserstoffes auf die noch vorliegende Menge an SiH-Funktionen geschlossen werden.

Die Polyether der Formel (VI) und die Polyetherreste der Formel (II) können statistisch aufgebaut sein. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Weiter bevorzugt gilt auch für die Polyether der Formel (VI) im erfindungsgemäßen Verfahren, dass der Polyetherrest nach Formel (VI) berechnet ohne R⁴O und berechnet ohne R⁵ besitzt eine Molmasse M (PE) berechnet sich nach 44 g/mol* m + 58 g/mol *n, wobei sich die Indices m und n wie für Formel (II) definiert sind.

Die bevorzugten Werte für M (PE) sind: untere Grenzen für M (PE) größer als 520 g/mol, bevorzugt größer als 530 g/mol, mehr bevorzugt größer als 535 g/mol; obere Grenzen für M (PE) kleiner als 660 g/mol, bevorzugt kleiner als 630 g/mol. Mehr bevorzugt kleiner als 600 g/mol.

Bevorzugt ist der Wert für M (PE) größer als 520 g/mol und kleiner als 660 g/mol, insbesondere größer als 535 g/mol und kleiner als 600 g/mol.

Bevorzugt ist die Summe m + n größer 9 bis zu 19, mehr bevorzugt größer 9,5 bis zu 15 und insbesondere bevorzugt größer 10 bis zu 12.

Mehr bevorzugt ist R⁵ gleich Wasserstoff und der der Wert für M (PE) größer als 520 g/mol und kleiner als 660 g/mol, insbesondere bevorzugt ist R₅ gleich Wasserstoff und der Wert für M (PE) größer als 535 g/mol und kleiner als 600 g/mol.

Besonders bevorzugt weisen die erfindungsgemäßen H-Siloxane der Formel (V) einen Index d zwischen 1 und 1,05 auf und werden mit terminal ungesättigten Polyethern der Formel (VI) umgesetzt, wobei die Indices) m von 3,4 bis 11,0 und n von 2,5 bis 8,0 sind.

Besonders bevorzugt weisen die erfindungsgemäßen H-Siloxane der Formel (V) einen Indexd zwischen 1 und 1,05 auf und werden mit terminal ungesättigten Polyethern der Formel (VI) umgesetzt, wobei das Verhältnis m/n ist 0,8 bis 2,8.

Insbesondere bevorzugt weisen die erfindungsgemäßen H-Siloxane der Formel (V) einen Index d zwischen 1 und 1,05 auf und werden mit terminal ungesättigten Polyethern der Formel (VI) umgesetzt, wobei die Molmasse des Polyetherrestes M(PE) ist größer als 520 g/mol und kleiner als 660 g/mol.

Insbesondere bevorzugt weisen die erfindungsgemäßen H-Siloxane der Formel (V) einen Index d zwischen 1 und 1,05 auf und werden mit terminal ungesättigten Polyethern der Formel (VI) umgesetzt, wobei der Rest R⁵ ist gleich Wasserstoff ist.

Insbesondere bevorzugt weisen die erfindungsgemäßen H-Siloxane der Formel (V) einen Index d zwischen 1 und 1,05 auf und werden mit terminal ungesättigten Polyethern der Formel (VI) umgesetzt, wobei die Molmasse des Polyetherrestes M(PE) ist größer als 520 g/mol und kleiner als 660 g/mol und der Rest R⁵ ist gleich Wasserstoff.

Bevorzugt weisen die Produkte des erfindungsgemäßen Verfahrens keine weiteren Polyether modifizierten Siloxane auf, die nicht den Produkten des erfindungsgemäßen Verfahrens entsprechen. Ein weiterer Gegenstand der vorliegenden Erfindung ist die Verwendung der erfindungsgemäßen Zusammensetzungen und/oder der erfindungsgemäßen Verfahrensprodukte als Adjuvant im Pflanzenschutz.

Das erfindungsgemäße Adjuvant eignet sich mit allen Pflanzenschutzmitteln für alle Pflanzen. Vorteilhaft wird das Adjuvant zusammen mit Herbiziden, Fungiziden, Insektiziden, Wachstumsregulatoren und Makro- sowie Mikronährstoffen (Düngemitteln) eingesetzt, vorzugsweise mit Herbiziden. Die Pflanzenschutzmittel und Düngemittel können sowohl synthetischem, wie auch biologischem und natürlichem Ursprungs sein.

Die erfindungsgemäßen Zusammensetzungen können weitere Komponenten aufweisen. Diese weiteren Komponenten können ausgewählt sein aus Herbiziden, Fungiziden, Insektiziden, Wachstumsregulatoren und Düngemitteln, vorzugsweise Herbiziden. Bevorzugte Düngemittel sind Makro- sowie Mikronährstoffe.

Bevorzugt werden die erfindungsgemäßen Zusammensetzungen als Tankmischungsadditiv für Spritzbrühen verwendet. Bevorzugte Einsatzkonzentrationen liegen hierbei zwischen 0,001 und 1 Vol.-%, bevorzugt zwischen 0,01 und 0,5 Vol.-% und besonders bevorzugt zwischen 0,02 und 0,15 Vol.-% (ca. entsprechend auch 0,1 Gew.-%) der Spritzbrühe. Dieses ist gleichbedeutend mit 10 bis 3000 ml/ha, wenn üblicherweise 100 bis 1000 L Spritzbrühe pro ha ausgebracht werden und bevorzugt eine Adjuvantmenge von 50 bis 700 ml/ha, die auch von den jeweiligen Spritzbrühmengen unabhängig von der Gesamtwasseraufwandmenge pro ha zugesetzt werden.

Aktivstoffe sind solche, die in den individuellen Ländern für die Anwendung auf Pflanzen und Kulturen zugelassen und/oder registriert und/oder gelistet sind, um Pflanzen gegen Schaden zu schützen, oder um den Ertragsverlust durch Schädlinge oder dergleichen bei einer Kultur zu vermeiden, oder um unerwünschten Begleitwuchs, wie Unkräuter und/oder Ungräser auszuschalten, oder um die Pflanze mit Nährstoffen (auch Düngemittel genannt) zu versorgen.. Aktivstoffe können synthetischer Art, wie auch biologischer Art sein. Aktivstoffe können auch Extrakte sein, oder Naturstoffe, oder antagonistisch aktive Organismen. Sie werden gewöhnlich auch als Pestizide oder Pflanzenschutzmittel bezeichnet. Generell sind Aktivstoffe zwecks Handhabung und Effizienz in Formulierungen eingearbeitet.

Pflanzenschutzmittelformulierungen werden für ihre Anwendung auf Pflanzen oder Pflanzenteile meist vor dem üblichen Aussprühen über Düsen mit Wasser verdünnt und enthalten neben der wirksamen Komponente auch andere Hilfsmittel, wie Emulgatoren, Dispergierhilfsstoffe, Antifrostmittel, Entschäumer, Biozide und oberflächenaktive Substanzen wie Tenside. Aktivstoffe, insbesondere Fungizide, Insektizide und Nährstoffe können auch allein oder in Kombination und versehen mit obig angegebenen anderen Hilfsmitteln auf Samen (Saatgut) von Pflanzen aufgebracht werden mit verschiedenen Methoden. Solche Methoden werden auch Saatgutbehandlungsmethoden genannt. Die Saatgutbehandlung mit Fungiziden und Insektiziden kann Pflanzen im frühen Stadium des Wachstums vor Krankheiten und Insektenbefall schützen.

Die erfindungsgemäßen Zusammensetzungen enthaltend die Polyether substituierten Siloxane der Formel (I), das erfindungsgemäße Verfahren sowie die erfindungsgemäße Verwendung der Zusammensetzungen und/oder Verfahrensprodukte werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend und vorausgehend Messwerte angegeben, so wurden diese Messwerte, wenn nicht anders angegeben, bei einem Druck von 101325 Pa (Normaldruck) und einer Temperatur von 25 °C ermittelt.

### Beispiele

**Allgemeine Methoden und Materialien:**

| Handelsbezeichnung | |
|---|---|
| Silwet L-77 | Produkt und Warenzeichen der Momentive |
| Silwet 806 | Produkt und Warenzeichen der Momentive |
| BREAK-THRU S 240 | Produkt und Warenzeichen der Evonik Degussa GmbH, Deutschland |
| BREAK-THRU S 278 | Produkt und Warenzeichen der Evonik Degussa GmbH, Deutschland |
| BREAK-THRU S 233 | Produkt und Warenzeichen der Evonik Degussa GmbH, Deutschland |
| Sylgard 309 | Produkt und Warenzeichen der Dow Corning, USA |

### Synthese

### Herstellung von Me₃SiO[SiMeHO]_{c}SiMe₃

Es wurde ein SiH funktionelles Siloxan der allgemeinen Formel Me₃SiO[SiMeHO]_{1,2}SiMe₃ einer fraktionierten Destillation unter Normaldruck unterzogen. Die Fraktion bei einer Kopftemperatur von 142 °C wurde mit Hilfe von Gaschromat als das Produkt mit einer Reinheit von 99 % Gew.-% 1,1,1,3,5,5,5-Heptamethyltrisiloxans ermittelt. Damit weist das Produkt der Formel (V) einen Index d von 1,01 auf. Anschließend wurde das Destillat und das Ausgangssilxan so gemischt, dass folgende Siloxane erhalten wurden: Me₃SiO[SiMeHO]_{1,2}SiMe₃, Me₃SiO[SiMeHO]_{1,15}SiMe₃, Me₃SiO[SiMeHO]_{1,10}SiMe₃, Me₃SiO[SiMeHO]_{1,05}SiMe₃ und Me₃SiO[SiMeHO]_{1,01}SiMe₃.

Die Bestimmung der Reinheit wurde mit Hilfe der ¹H-NMR- und ²⁹Si-Spektroskopie durchgeführt. Diese Methoden, insbesondere unter Berücksichtigung der Multiplizität der Kopplungen sind dem Fachmann geläufig.

Mit Hilfe dieser Siloxane wurden 21 Proben analog der folgenden allgemeinen Herstellvorschrift hergestellt.

### Allgemeine Synthesevorschrift Hydrosilylierung:

In einem 1000 ml Dreihalskolben ausgestattet mit Rührer und Rückflusskühler wurden 0,5 mol eines Polyethers der allgemeinen Formel CH₂=CHCH₂O[CH₂CH₂O]ₘ[CH₂CH(CH₃)O]ₙR⁵ vorgelegt und auf 90°C erhitzt. Anschließend wurden 10 ppm Pt in Form einer toluolischen Lösung des Karstedt-Katalysators (2 mol-% Pt-Gehalt) zugesetzt. Es wurde 10 min gerührt und anschließend wurden 0,38 mol SiH-Gruppen in Form des SiH-funktionellen Siloxans Me₃SiO[SiMeHO]_{c}SiMe₃ tropfenweise innerhalb von 15 min zugesetzt. Eine exotherme Reaktion wurde beobachtet, die Reaktionsmischung wurde weitere 4 h bei 90 °C gerührt. In allen Fällen konnte anschließend gasvolumetrisch keine SiH-Funktionen mehr nachgewiesen werden.

**Tabelle 1: Hergestellte Proben, die Angaben R⁵, c, m, n, M (PE) und m/n beziehen sich auf Formel (I) und respektive auf Formel (II); in den Fällen für n = 0 ist m/n nicht definiert und folglich nicht angegeben:**

| Probe | R⁵ | c | m | n | M (PE) | m/n |
|---|---|---|---|---|---|---|
| Tego XP 11022 | H | 1,00 | 8,0 | 3,3 | 543 | 2,45 |
| Probe 1 | H | 1,01 | 7,8 | 0,0 | 343 | --- |
| Probe 2 | H | 1,20 | 6,0 | 3,0 | 438 | 1,98 |
| Probe 3 | H | 1,01 | 10,0 | 0,0 | 440 | -- |
| Probe 4 | Me | 1,01 | 7,8 | 0,0 | 343 | -- |
| Probe 5 | H | 1,20 | 9,9 | 1,9 | 545 | 5,27 |
| Probe 6 | H | 1,01 | 14,6 | 0,0 | 642 | -- |
| Probe 7 | Me | 1,01 | 12,3 | 0,0 | 541 | -- |
| Probe 8 | H | 1,01 | 12,3 | 0,0 | 541 | -- |
| Probe 9 | H | 1,01 | 9,9 | 1,9 | 546 | 5,27 |
| Probe 10 | H | 1,01 | 8,0 | 3,3 | 543 | 2,45 |
| Probe 11 | H | 1,01 | 6,2 | 4,7 | 545 | 1,32 |
| Probe 12 | H | 1,01 | 4,9 | 5,6 | 540 | 0,88 |
| Probe 13 | H | 1,01 | 3,4 | 10,2 | 741 | 0,33 |
| Probe 14⁾ | H | 1,01 | 10,7 | 8,1 | 941 | 1,32 |
| Probe 15⁾ | H | 1,01 | 14,4 | 7,0 | 1040 | 2,06 |
| Probe 16⁾ | H | 1,05 | 8,0 | 3,3 | 543 | 2,45 |
| Probe 17⁾ | H | 1,10 | 8,0 | 3,3 | 543 | 2,45 |
| Probe 18 | H | 1,15 | 8,0 | 3,3 | 543 | 2,45 |
| Probe 19 | H | 1,20 | 9,2 | 4,1 | 643 | 2,24 |
| Probe 20 | H | 1,20 | 3,4 | 10,2 | 741 | 0,33 |
| Probe 21 | H | 1,20 | 10,7 | 8,1 | 941 | 1,32 |

Proben 2, 5, 19, 20 und 21 sind nicht erfindungsgemäße Polyethersiloxane, da der Index c zu hoch ist. Proben 1, 3, 4, 6, 7 und 8 sind nicht erfindungsgemäß, da der Index n gleich null ist. Proben 5 und 9 sind nicht erfindungsgemäß, weil der Gehalt an Oxyethylengruppen zu niedrig ist.

### Prüflösungen:

Es wurden 0,1 Gew.-% Lösungen der Prüfsubstanzen in destilliertem Wasser angefertigt.

### Spreitungstest

Die Spreitung wurde untersucht durch Aufbringen eines 50 µl Tropfens der Prüflösungen auf eine Standard Polypropylene Folie (Typ: Forco-OPPB, Fa. Van Leer). Der Tropfen wurde mit einer Micropipette aufgebracht. Die gespreitete Fläche wurde 90 Sekunden nach dem Aufbringen gemessen. Die Versuche wurden bei 23°C und einer relativen Luftfeuchtigkeit von 60 % durchgeführt.

### Oberflächenspannunpen

Die Oberflächenspannungen wurden mit der Wilhelmy plate method mit einem Kruss K 12 Tensiometer gemessen bei 25°C gemessen.

### Biologische Abbaubarkeit nach OECD

Die biologische Abbaubarkeit wurde gemäß OECD Methode 301 F anhand der "manometric respirometry" bei einer Temperatur von 22°C ± 1°C ermittelt. Die Abbaurate wurde innerhalb von 28 Tagen bestimmt. Die Proben waren in einer Konzentration von 100 mg/l und 28 mg/l sowohl gegen eine Nullprobe (mineral medium), als auch gegen eine gleich konzentrierte Natriumbenzoat-Lösung vermessen worden. Die Werte wurden sowohl nach 14 als auch nach 28 Tagen erhoben. Nach 14 Tagen war noch keine Plateauphase erreicht. Die verwendeten Klärschlammproben stammten aus der Kläranlage des Ruhrverbandes, Sunthelle 6, 57392 Schmallenberg vom 16 September 2014. Die verwendete Konzentration betrug 29,6 mg Trockenmasse pro Liter Mineralmedium, der pH wurde vor Beginn der Versuche mit 7,4 ± 0,2 bestimmt.

### Ergebnisse der Grenzflächenaktivitätsuntersuchung:

Als Vergleichssubstanzen wurden einige kommerzielle Produkte, sowie Substanzen gemäß US 6,734,141 verwendet.
Surfactant B: Me₃SiO-[MeR'SiO]_{1,20}-OSiMe₃, mit R'= -(CH₂)₃-O-(CH₂CH₂O-)₁₀(CH₂CH(CH₃)O-)₂-H
Surfactant C:Me₃SiO-[MeR'SiO]_{1,00}-OSiMe₃, mit R'= -(CH₂)₃-O-(CH₂CH₂O-)₂₀(CH₂CH(CH₃)O-)₅-H
Surfactant D: Me₃SiO-[MeR'SiO]_{1,00}-OSiMe₃, mit R'= -(CH₂)₃-O-(CH₂CH₂O-)_{12,5}-H
BREAK-THRU S 233: Me₃SiO-[MeR'SiO]_{1,20}-OSiMe₃, mit R'= -(CH₂)₃-O-(CH₂CH₂O-)_{9,9} (CH₂CH(CH₃)O-)_{1,9}-H
BREAK-THRU S 240: Me₃SiO-[MeR'SiO]_{1,20}-OSiMe₃, mit R'= -(CH₂)₃-O-(CH₂CH₂O-)₆(CH₂CH(CH₃)O-)₃-H
BREAK-THRU S 278: Me₃SiO-[MeR'SiO]_{1,20}-OSiMe₃, mit R'= -(CH₂)₃-O-(CH₂CH₂O-)_{7,8}-Me
SILWET L77: Me₃SiO-[MeR'SiO]-OSiMe₃, mit R'= -(CH₂)₃-O-(CH₂CH₂O-)₈-Me

| Adjuvant | Statische Oberflächenspannung [mN/m] | Spreitung Durchmesser [mm] | biologisch abbaubar |
|---|---|---|---|
| Tego XP 11022 | 22,9 | 70 | Ja |
| Probe 1 | 21,6 | | Nein |
| Probe 2 | 21,7 | | Nein |
| Probe 3 | 21,6 | 53 | Nein |
| Probe 4 | 22,0 | 70 | Nein |
| Probe 5 | 21,4 | 15 | |
| Probe 6 | 22,8 | 15 | |
| Probe 7 | 22,7 | 15 | Nein |
| Probe 8 | 22,7 | 15 | Ja |
| Probe 9 | 21,9 | 30 | |
| Probe 10 | 21,4 | 70 | Ja |
| Probe 11 | 22,3 | 80 | |
| Probe 12 | 22,2 | 75 | |
| Probe 13 | | 16 | |
| Probe 14⁾ | | 15 | |
| Probe 15⁾ | 26,8 | 11 | |
| Probe 16⁾ | 21,7 | 60 | Ja |
| Probe 17⁾ | 21,7 | 60 | Ja |
| Probe 18 | 22,0 | 53 | Ja |
| Probe 19 | 23,5 | 16 | |
| Probe 20 | 34,8 | 12 | |
| Probe 21 | 25,3 | 12 | |
| Surfactant B | 24,1 | 14 | |
| Surfactant C | 28,2 | 10 | |
| Surfactant D | 23,8 | 13 | |
| BREAK-THRU S 240 | 22,3 | 70 | |
| BREAK-THRU S 278 | 22,0 | 70 | |
| BREAK-THRU S 233 | 21,4 | 15 | |
| Silwet 806 | 23,5 | 70 | |
| Silwet L77 | 23,8 | 80 | |
| Silguard 309 | 23,0 | 80 | |

Typische Superspreiter zeigen eine Spreitdurchmesser in diesem Test von 35 mm oder mehr.

Es zeigt sich, dass biologisch abbaubare Superspreiter einen sehr definierten Aufbau besitzen.

Der Polyether muss ein gewisses Molgewicht besitzen, darf aber auch nicht zu schwer sein. Zudem muss der Polyether eine gewisse Zahl an [CH₂CH(CH₃)O]-Gruppen aufweisen, jedoch muss weiterhin ein gewisses Verhältnis zwischen [CH₂CH(CH₃)O]- und an [CH₂CH₃O]-Gruppen eingehalten werden. Des Weiteren muss darf das Siloxan nicht zu uneinheitlich sein.

Die Ergebnisse zeigen die vorteilhafte Verwendung der erfindungsgemäßen Substanzen.

**Ergebnisse der biologischen Abbaubarkeit:**

| Adjuvant | Biol. Abbaubarkeit [%] |
|---|---|
| Probe 8 | 60 % |
| Probe 10 | 66 % |
| Probe 1 | < 60 % |
| Probe 2 | < 60 % |
| Probe 7 | 7 % |
| Probe 3 | < 60 % |

Die Ergebnisse zeigen die leichte biologische Abbaubarkeit der erfindungsgemäßen Substanzen.

### Glashausversuche zur Ermittlung der biologischen Wirkungsverbesserung eines Herbizids

Im Gewächshaus wurde Wiesenrispengras (*Poa pratense*) in Töpfen angezogen. Sobald die Pflanzen eine Höhe von ca. 5 bis 7 cm erreicht hatten, wurden sie mit Spritzbrühe, welche das Herbizid Cato® (DuPont, Deutschland, Wirkstoff Rimsulfuron, Konzentration 250 g Wirkstoff/kg) enthielt, besprüht. Die Sprühmenge, welche den Wirkstoff enthielt, entsprach 200 l/ha. Der Spritzbrühe wurden verschieden Adjuvantien zugesetzt. Pro Versuchsglied gab es 3 Töpfe, die gleich behandelt wurden. Die Dosierung des Pestizids betrug 10 g/ha. Als kommerzielle Standardnetzmittel wurden Break-Thru S240 und Trisiloxane BREAK-THRU S233 mit je 50 ml/ha dem Tank zugesetzt. Die Dosierung des Tego XP 11022 betrug 100 ml/ha. Hierbei wird die Schädigung der Pflanzen durch die Herbizidbehandlung mit unbehandelten Pflanzen verglichen und die Wirksamkeit der Sprühbehandlung wird zu den unbehandelten Pflanzen ins Verhältnis gesetzt. Die Wirksamkeit wurde von jedem der 3 Töpfe pro Versuchsglied mit dem Fachmann bekannten Methoden bonitiert, 14 und 28 Tage nach der Behandlung. Der Mittelwert wurde berechnet und als Prozentwert gegenüber der Kontrolle ohne Behandlung mit Herbizid in der Tabelle als Resultate angegeben.

| Herbizid | Adjuvant | 14d | 28 d |
|---|---|---|---|
| Cato, 10 ml/ha | ohne | 50 % | 74 % |
| Cato, 10 ml/ha | Tego XP 11022, 100 ml/ha | 70 % | 94 % |
| Cato, 10 ml/ha | BREAK-THRU S240, 50 g/ha | 60 % | 84 % |
| Cato, 10 ml/ha | BREAK-THRU S233, 50 g/ha | 50 % | 83 % |

Die Ergebnisse zeigen, dass die erfindungsgemäße Zusammensetzung eine deutliche Wirkungssteigerung gegenüber der Herbizidbehandlung ohne Netzmittel erbrachte. Die vorteilhafte Verwendung der erfindungsgemäßen Zusammensetzungen gegenüber dem Stand der Technik ist mit diesem Versuch dargestellt.

## Patentansprüche

1. Zusammensetzungen enthaltend Polyether modifizierte Siloxane gemäß Formel (I)
MₐD_{b}D'_{c} Formel (I)
Mit M = R¹₃SiO_{1/2}, D = R¹₂SiO_{2/2}, D' = R¹R²SiO_{2/2},
wobei
a gleich 2
b zwischen 0 und 0,1,
c zwischen 1,00 und 1,05
R¹ unabhängig voneinander Kohlenwasserstoff mit 1 bis 8 Kohlenstoffatomen,
R² unabhängig voneinander ein Polyether-Rest der Formel (II)
-R³O[CH₂CH₂O]ₘ[CH₂CH(CH₃)O]ₙ R⁵ Formel (II)
wobei
m = 3,4 bis 11,0,
n = 2,5 bis 8,0
jedoch mit den Maßgaben, dass gilt:
m/n = 1,9 bis 2,8,
R³ unabhängig voneinander divalente Kohlenwasserstoffreste mit 2 bis 8 Kohlenstoffatomen,
R⁵ Wasserstoff,
wobei die Polyether modifizierte Siloxane gemäß Formel (I) eine biologische Abbaubarkeit gemäß OECD 301 F von größer 60%, wobei der Maximalwert 100% beträgt
wobei die Molmasse des Polyetherrestes M(PE) größer als 520 g/mol und kleiner als 660 g/mol ist,.

2. Zusammensetzungen nach Anspruch 1 **dadurch gekennzeichnet, dass** die Summe m + n größer 9 bis zu 19, mehr bevorzugt größer 9,5 bis zu 15 und insbesondere bevorzugt größer 10 bis zu 12 ist.

3. Verfahren zur Herstellung der Polyether modifizierten Siloxane nach Formel (I) gemäß Anspruch 1, in dem in einem ersten Schritt ein H-Siloxan der Formel (V)
MₐD_{b}D'_{d} (V)
mit M = R¹₃SiO_{1/2;} D = R¹₂SiO_{2/2}, D' = R¹R²SiO_{2/2},
wobei
a gleich 2,
b zwischen 0 und 0,1,
d zwischen 1,16 und 3
R¹ unabhängig voneinander Kohlenwasserstoff mit 1 bis 8 Kohlenstoffatomen,
R² Wasserstoff
gereinigt wird und in einem zweiten Schritt im Sinne einer Hydrosilylierung mit einem terminal ungesättigten Polyether der Formel (VI)
R⁴O[CH₂CH₂O]ₘ[CH₂CH(CH₃)O]ₙR⁵ (VI)
wobei die Indices m und n sowie deren Verhältnis zueinander und R⁵ wie für Formel (II) gemäß Anspruch 1 definiert sind,
R⁴ unabhängig voneinander einwertiger terminal ungesättigter Kohlenwasserstoff mit 2 bis 8 Kohlenstoffatomen,
unterzogen wird.

4. Verfahren nach Anspruch 3 **dadurch gekennzeichnet, dass** zur Reinigung des H-Siloxans der Formel (V) ein thermisches Trennverfahren zur Anwendung kommt.

5. Verwendung der Zusammensetzungen nach einem der Ansprüche 1 bis 2 oder der erfindungsgemäßen Verfahrensprodukte nach einem der Ansprüche 3 oder 4 als Adjuvant im Pflanzenschutz.

6. Verwendung der Zusammensetzungen nach Anspruch 5 als Tankmischungsadditiv für Spritzbrühen in einer Konzentration von 0,001 bis 1 Vol._% der Spritzbrühe.

## Claims

1. Compositions comprising polyether-modified siloxanes of formula (I)
MₐD_{b}D'_{c} Formula (I)
with M = R¹₃SiO_{1/2}, D = R¹₂SiO_{2/2}, D' = R¹R²SiO_{2/2}, where
a is 2
b is between 0 and 0.1,
c is between 1.00 and 1.05,
R¹ are independently hydrocarbyl having 1 to 8 carbon atoms,
R² are independently a polyether radical of the formula (II)
-R³O[CH₂CH₂O]ₘ [CH₂CH(CH₃)O]ₙ R⁵ Formula (II)
where
m = 3.4 to 11.0,
n = 2.5 to 8.0,
but with the provisos that:
m/n = 1.9 to 2.8,
R³ are independently divalent hydrocarbyl radicals having 2 to 8 carbon atoms,
R⁵ is hydrogen,
the polyether-modified siloxanes of formula (I) having a biodegradability according to OECD 301 F of greater than 60%, the maximum value being 100%, where the molar mass of the polyether radical M(PE) is greater than 520 g/mol and less than 660 g/mol.

2. Compositions according to Claim 1, **characterized in that** the sum total of m + n is greater than 9 up to 19, more preferably greater than 9.5 up to 15 and especially preferably greater than 10 up to 12.

3. Process for preparing the polyether-modified siloxanes of formula (I) according to Claim 1, in which, in a first step, an H-siloxane of the formula (V)
MₐD_{b}D'_{d} (V)
with M = R¹₃SiO_{1/2;} D = R¹₂SiO_{2/2}, D' = R¹R²SiO_{2/2},
where
a is 2,
b is between 0 and 0.1,
d is between 1.16 and 3,
R¹ are independently hydrocarbyl having 1 to 8 carbon atoms,
R² is hydrogen
is purified and, in a second step, is reacted in the manner of a hydrosilylation with a terminally unsaturated polyether of the formula (VI)
R⁴O[CH₂CH₂O]ₘ[CH₂CH(CH₃)O]ₙR⁵ (VI)
where the indices m and n and their ratio to one another and R⁵ are as defined for formula (II) according to Claim 1,
R⁴ are independently monovalent terminally unsaturated hydrocarbyl having 2 to 8 carbon atoms.

4. Process according to Claim 3, **characterized in that** the H-siloxane of the formula (V) is purified by employing a thermal separation process.

5. Use of the compositions according to either of Claims 1 and 2 or of the inventive process products according to either of Claims 3 and 4 as adjuvant in crop protection.

6. Use of the compositions according to Claim 5 as a tankmix additive for spray liquors in a concentration of 0.001% to 1% by volume of the spray liquor.

## Revendications

1. Compositions contenant des siloxanes modifiés par des polyéthers selon la formule (I)
MₐD_{b}D'_{c} Formule (I)
dans laquelle
M = R¹₃SiO_{1/2},
D = R¹₂SiO_{2/2},
D' = R¹R²SiO_{2/2},
où
a vaut 2,
b est situé entre 0 et 0,1,
c est situé entre 1,00 et 1,05,
R¹ représente, indépendamment, un hydrocarbure comprenant 1 à 8 atomes de carbone,
R² représente, indépendamment, un radical polyéther de formule (II)
-R³O[CH₂CH₂O]ₘ[CH₂CH(CH₃)O]ₙR⁵ Formule (II)
dans laquelle
m = vaut 3,4 à 11,0,
n = vaut 2,5 à 8,0
cependant sous réserve que m/n = 1,9 à 2,8,
R³ représente, indépendamment, des radicaux hydrocarbonés divalents comprenant 2 à 8 atomes de carbone,
R⁵ représente hydrogène,
les siloxanes modifiés par polyéther selon la formule (I) présentant une biodégradabilité selon la norme OECD 301 F supérieure à 60%, la valeur maximale étant de 100%, la masse molaire du radical polyéther M(PE) étant supérieure à 520 g/mole et inférieure à 660 g/mole.

2. Compositions selon la revendication 1, **caractérisées en ce que** la somme m + n est supérieure à 9 jusqu'à 19, plus préférablement supérieure à 9,5 jusqu'à 15 et en particulier de préférence supérieure à 10 jusqu'à 12.

3. Procédé pour la préparation des siloxanes modifiés par polyéther selon la formule (I) selon la revendication 1, dans lequel, dans une première étape, on purifie un H-siloxane de formule (V)
MₐD_{b}D'_{d} (V)
dans laquelle
M = R¹₃SiO_{1/2};
D = R¹₂SiO_{2/2},
D' = R¹R²SiO_{2/2},
où
a vaut 2,
b est situé entre 0 et 0,1,
d est situé entre 1,16 et 3,
R¹ représente, indépendamment, un hydrocarbure comprenant 1 à 8 atomes de carbone,
R² représente hydrogène
et, dans une deuxième étape, on le soumet, dans le sens d'une hydrosilylation, à un polyéther insaturé en position terminale de formule (VI)
R⁴O[CH₂CH₂O]ₘ[CH₂CH(CH₃)O]ₙR⁵ (VI)
les indices m et n ainsi que leur rapport respectif et R⁵ étant définis comme pour la formule (II) selon la revendication 1,
R⁴ représente, indépendamment, un hydrocarbure monovalent insaturé en position terminale comprenant 2 à 8 atomes de carbone.

4. Procédé selon la revendication 3, **caractérisé en ce que**, pour la purification du H-siloxane de formule (V), un procédé de séparation thermique est utilisé.

5. Utilisation des compositions selon l'une quelconque des revendications 1 à 2 ou des produits de procédé selon l'invention selon l'une quelconque des revendications 3 ou 4 comme adjuvant dans la phytoprotection.

6. Utilisation des compositions selon la revendication 5 comme additif de mélange dans un réservoir pour des bouillons de pulvérisation en une concentration de 0,001 à 1% en volume du bouillon de pulvérisation.
